# EUROPEAN PATENT SPECIFICATION

(11) **EP 4 144 558 B1**
(45) Date of publication and mention of the grant of the patent: **01.04.2026**
(21) Application number: 21195109.0
(22) Date of filing: 06.09.2021
(51) Int. Cl.: B60K 25/08, B60H 1/00, B60H 1/32, B60L 1/00, B60L 1/02, B60L 50/61

(54) **A TRANSPORT REFRIGERATION SYSTEM**
TRANSPORTKÜHLSYSTEM
SYSTÈME DE RÉFRIGÉRATION DE TRANSPORT

(43) Date of publication of application: 08.03.2023
(73) Proprietor: Carrier Corporation, Palm Beach Gardens, FL 33418 (US)
(72) Inventor: CHAPEAU, Lucas, 76230 Isneauville (FR)
(74) Representative: Dehns

(56) References cited:
- EP-A1- 3 427 992
- WO-A1-2020/117467
- US-B1- 8 723 344

## Description

The invention relates to a transport refrigeration system and a method of assembling the same.

Typically, cold chain distribution systems are used to transport and distribute cargo, or more specifically perishable goods and environmentally sensitive goods (herein referred to as perishable goods) that may be susceptible to temperature, humidity, and other environmental factors. Perishable goods may include but are not limited to fruits, vegetables, grains, beans, nuts, eggs, dairy, seed, flowers, meat, poultry, fish, ice, and pharmaceuticals. Advantageously, cold chain distribution systems allow perishable goods to be effectively transported and distributed without damage or other undesirable effects.

Refrigerated vehicles and trailers are commonly used to transport perishable goods in a cold chain distribution system.

Conventionally, transport refrigeration systems (such as refrigerated vehicles and refrigerated trailers) include a transportation refrigeration unit. Such transport refrigeration units may comprise a refrigerant compressor, a condenser with one or more associated condenser fans, an expansion device, and an evaporator with one or more associated evaporator fans, which are connected via appropriate refrigerant lines in a closed refrigerant flow circuit. The transport refrigeration unit is mounted to the vehicle or to the trailer in operative association with a cargo space defined within the vehicles or trailer for maintaining a controlled temperature environment within the cargo space. Air or an air/ gas mixture is drawn from the interior volume of the cargo space by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo space.

On commercially available transport refrigeration systems such as refrigerated vehicles and refrigerated trailers, the compressor, and typically other components of the transportation refrigeration unit, are typically powered during transit by an electric motor. In transport refrigeration systems that are electrically driven, a prime mover of the transport refrigeration system drives a generator that generates power. The generated power can be used to power the electric motor for driving the refrigerant compressor of the transportation refrigeration unit and also can be used for powering electric fan motors, for driving the condenser and evaporator motors, and for powering electric heaters associated with the evaporator.

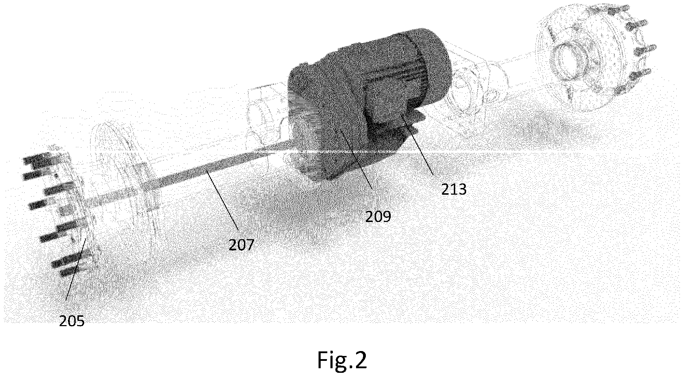

A first known type of electrically driven transport refrigeration system involves mechanically coupling a wheel axle of the transportation refrigeration system to a generator (of the rotational type) to generate electrical power. This arrangement is shown in Figure 2. As shown, a wheel axle 207 of a wheel 205 of a transportation refrigeration system is mechanically coupled to a gearbox 209, which in turn is mechanically coupled to a generator 213. Rotation of the wheel axle 207 thereby causes the generator 213 to be driven into rotation to create electricity. This electricity can then be supplied to a transport refrigeration unit of the transport refrigeration system.

A further known type of electrically driven transport refrigeration as disclosed in WO 2020/117467 A1 involves coupling a wheel of the transport refrigeration system to a linear generator via mechanical linkage.

EP 3427992 A1 discloses a transport refrigeration system in which a running wheel is coupled to a generator via a movable swivel arm and rotational movement of the running wheel is transmitted to the generator via a belt or chain.

Improved transport refrigeration systems of the electrically driven type are desired.

In accordance with a first aspect of the invention, there is provided a transport refrigeration system comprising: a transportation refrigeration unit; and a generator coupled to a wheel axle of the transport refrigeration system via a coupling, wherein the generator is configured to be driven to generate electricity by rotation of the wheel axle and to supply that electricity to the transportation refrigeration unit; wherein the coupling is a magnetic coupling. The generator is a rotational generator and the rotational axis of the generator is aligned with the wheel axle.

A magnetic coupling is composed of two sides, with a gap (either radial or axial depending on the nature of the coupling) provided therebetween. As such, there is no mechanical link between each side of the coupling. Rather the two sides of the coupling are linked via the magnetic fields produced from their respective magnets.

The invention of the first aspect shares many similarities to the first known type of electrically driven transport refrigeration system discussed above. However, in the invention of the first aspect the coupling between the generator and the wheel axle is a magnetic coupling rather than a mechanical coupling. The use of a magnetic coupling in the first aspect of the invention provides a number of notable advantageous effects. Most notably, the use of a magnetic coupling allows for the wheel axle to become disengaged and/or slip relative to the generator due to an overload. This property can, e.g., avoid the wheels becoming locked or blocked as a result of a blockage in the generator (e.g. resulting from failure of the generator) or a blockage on the generator side of the coupling. As will be appreciated, this results in an overall safer transport refrigeration system. Moreover, this effect avoids damage to the coupling, wheel axle and/or generator that may otherwise result from an overload.

This same advantageous effect is not achievable with, e.g., the first known type of electrically driven transport refrigeration system discussed above. In view of the mechanical coupling providing direct physical contact between the wheel axle and generator sides of the coupling, any blockages on the generator side of the coupling will inevitably result in locking or blocking of the wheel axle and thus the wheels. This results in a less safe arrangement than the system of the first aspect provides. Furthermore, as the mechanical coupling does not allow for slip or disengagement as is the case for the magnetic coupling of the invention, damage to the wheel axle, generator and/or mechanical coupling itself is likely in the event of an overload.

Thus, the magnetic coupling utilised in the first aspect of the invention provides for overload protection which cannot be provided by the mechanical couplings used heretofore in the prior art.

The use of a magnetic coupling as in the first aspect of the invention is also advantageous in that it can significantly reduce the maintenance requirements and upkeep of the transport refrigeration system. The magnetic coupling of the first aspect of the invention would typically have a 10 year (or greater) lifecycle, which is significantly increased as compared to a mechanical coupling. A mechanical coupling would be highly susceptible to coupling degradation in view of the highly attritional forces at the interface of the coupling, and thus is associated with a significantly greater degree of maintenance and upkeep.

The magnetic coupling of the first aspect of the invention also results in reduced vibrational feedback from the wheel axle to the generator (and vice versa) as compared to a prior art mechanical coupling. In that way the impact that vibrations from, e.g., uneven road surface have on the performance of the generator can be reduced.

The transportation refrigeration system may comprise an electrical energy storage device (e.g. one or more batteries) connected to the generator and to the transportation refrigeration unit, the electrical energy storage device being configured to receive and store electrical energy from the generator and to provide electrical power to the transportation refrigeration unit. The electrical energy storage device may thus act as an intermediary between the generator and the transportation refrigeration unit, and may ensure a near constant provision of electrical power to the transportation refrigeration unit when the supply from the generator may not be constant. Where an energy storage device is provided, the supply of electricity to the transportation refrigeration unit from the generator may be considered an indirect supply.

The transport refrigeration system may comprise power electronic components configured to filter the electricity generated at the generator prior to its supply to the refrigeration unit. Filtering by the power electronic components may be necessary where the electricity output from the generator is not in a form readily usable by the refrigeration unit. The power electronic components may be comprised as part of the energy storage device, if present, or the refrigeration unit.

The transportation refrigeration system may comprise a gearbox coupled between the wheel axle and the generator. The gearbox may be provided on either the wheel axle side or the generator side of the coupling. The gearbox can be used to ensure that the generator is driven at, or as close to as possible, a desired speed (e.g. for improved efficiency of electricity generation), and that the speed at which it is driven is not solely dictated by the rotation speed of the wheel axle.

Blockages in gearboxes can be common due to failure of the components of the gearbox, leakage of lubricant or otherwise. Therefore, in an optional and advantageous alternative of the invention, the gearbox is provided on the generator side of the magnetic coupling. In this arrangement, the safety of the system is yet further improved since wheel locking or blocking resulting from gearbox blocking can be avoided by virtue of the magnetic coupling.

The magnetic coupling may be an axial magnetic coupling. Axial magnetic couplings are advantageous as they enable a smaller, more compact coupling and thus smaller, more compact transport refrigeration system.

The axial magnetic coupling may comprise two opposed and parallel rotor plates with an air gap therebetween. The rotor plates may be identical to one another. Each rotor plate may have, attached thereto, a plurality of magnets. The pluralities of magnets may be glued to their respective rotor plates. The pluralities of magnets may be axially magnetised permanent magnets. The axially magnetised permanent magnets may be arranged on each rotor in order to form a north-south alternating polarity on the face of the rotor. The rotor plate(s) may be formed of iron and as such form an iron yoke.

The magnetic coupling may be a radial magnetic coupling.

The magnetic coupling may comprise permanent magnets, electromagnets, or a mixture of permanent magnets and electromagnets.

The magnetic coupling may comprise axially magnetised permanent magnets.

The magnetic coupling may be a synchronous magnetic coupling (i.e. both sides of the coupling rotate at the same speed). A synchronous type coupling sets a limit on the amount of torque that can be transmitted between the driven part of the system (i.e. the generator) and the driver in the system (i.e. the wheel axle). Beyond this torque limit, the coupling drops out as the load angle between the magnets on the driven and driver part of the coupling becomes too large. To recouple the magnetic coupling, rotation of the wheel axle and the generator has to be stopped or brought to a neat standstill since a synchronous coupling requires a gradual start.

The magnetic coupling may be an asynchronous magnetic coupling. An asynchronous type coupling also sets a limit on the amount of torque that can be transmitted between the driven part of the system (i.e. the generator) and the driver in the system (i.e. the wheel axle). However, contrary to the synchronous coupling discussed above, beyond this torque limit the coupling does not drop out. Instead, as the torque from the driver (i.e. the wheel axle) increases the torque provided to the driven part of the system (i.e. the generator) remains constant and the magnetic coupling begins to slip, thereby producing heat as a result of the Eddy current effect.

The asynchronous magnetic coupling may be configured to be used as a variable speed coupling.

The gap between the two sides of the magnetic coupling may be adjustable. For instance, one or both sides of the magnetic coupling may be movable relative to one another in order that the gap between the two can be adjusted.

For a synchronous coupling, an adjustable gap can allow for the torque limit of the coupling to be adjusted, with a larger gap raising the torque limit and a smaller gap lowering the torque limit.

For an asynchronous coupling, an adjustable gap can allow for the coupling to act as a variable speed coupling, with the speed of rotation of the generator side of the coupling being dependent on the distance between the two sides of the coupling.

The generator side of the magnetic coupling and/or the wheel axle side of the magnetic coupling may be situated in a respective housing.

The housing(s) prevent 'bumping' (i.e. undesirable, physical contact) between the generator side of the magnetic coupling and the wheel axle side of the magnetic coupling. The housing(s) may also be used to ensure that a gap between the two parts of the magnetic coupling is maintained to thereby prevent a physical mechanical connection between the two.

The generator may be situated in the same housing as the generator side of the magnetic coupling. The wheel axle may be situated in the same housing as the wheel axle side of the magnetic coupling.

In this way, the housing(s) encapsulate and shield the generator and/or the wheel axle and their respective sides of the magnetic coupling from one another. The modularity of the system is thus improved since the generator and/or the wheel axle can be readily installed and removed from the system by introducing/removing its housing without having to deal with complicated connections between the two.

The gearbox may be provided in the wheel axle and/or generator housing. Alternatively, the gearbox may be provided in its own housing. The gearbox being provided in a housing improves modularity of the system. Leakages from the gearbox can also be better controlled/avoided and not spread to other components undesirably.

Where a housing(s) is/are present, each housing should be made of a material that enables the magnetic forces of the magnetic coupling to permeate therethrough. For example, the housing can be made of a ferromagnetic material, e.g. iron, or a non-ferromagnetic material but which still enables the magnetic force of the coupling to sufficiently permeate therethrough.

The transport refrigeration system may comprise a barrier situated in the gap between the two opposed sides of the magnetic coupling. The barrier allows the magnetic forces from each side of the magnetic coupling to permeate therethrough to enable the coupling to properly function. For example, the barrier may be made from iron or another ferromagnetic material. The barrier may be made of a nonmagnetic material. The barrier may be used to maintain a gap between the two parts of the magnetic coupling.

The barrier may form part of the, one some or all of the housing(s). Alternatively the barrier may be provided in addition to or instead of the housing/some of the housings/all of the housings.

The magnetic coupling may be configured to transmit torque in the range of 35 Nm - 400 Nm or torque in the range of 35 Nm - 300 Nm.

The transport refrigeration system may be a refrigerated vehicle or a refrigerated trailer. The transport refrigeration unit may be mounted to the refrigerated vehicle or to the trailer.

The transport refrigeration unit may be in operative association with a cargo space defined within the transport refrigeration system (e.g. within the vehicle or trailer) and for maintaining a controlled temperature environment within the cargo space.

The transport refrigeration unit may comprise a refrigerant compressor, a condenser, one or more condenser fans, an expansion device, an evaporator, and/or one or more associated evaporator fans. Any of these components, if present, may be connected by appropriate refrigerant lines in a closed refrigerant flow circuit.

The transportation refrigeration unit may comprise an electric motor connected to the generator or the energy storage device. The electric motor may be configured to convert the electricity produced at the generator or supplied from the energy storage device into kinetic energy. The kinetic energy produced may be used to drive components of the transport refrigeration unit, e.g. the compressor.

In a second aspect of the invention, there is provided a cold chain distribution system comprising at least one transport refrigeration system in accordance with the first aspect of the invention, optionally incorporating any optional features of the first aspect of the invention.

In a third aspect of the invention, there is provided a method of assembling a transport refrigeration system. The method comprises providing a transportation refrigeration unit; coupling, via a coupling, a generator to a wheel axle of the transport refrigeration system such that the generator is configured to be driven to generate electricity by rotation of the wheel axle; and connecting the generator to the transportation refrigeration unit such that the generator is configured to supply electricity to the transportation refrigeration unit; wherein the coupling is a magnetic coupling. The generator is a rotational generator and the rotational axis of the generator is aligned with the wheel axle.

The method of the third aspect of the invention may result in the assembly of the transportation refrigeration system of the first aspect of the invention, optionally including any optional features thereof.

Certain preferred embodiments of the invention will now be described, by way of example only, and with reference to the accompanying drawings, in which:
Figure 1 shows a transportation refrigeration system;
Figure 2 shows components of a prior art transportation refrigeration system;
Figure 3 shows a gearbox, an axial magnetic coupling and generator of a transportation refrigeration system;
Figure 4 shows an enlarged view of the axial magnetic coupling of Figure 3;
Figure 5 shows one side of the axial magnetic coupling of Figure 3;
Figure 6 shows a modified version of the gearbox, axial magnetic coupling and generator of Figure 3;
Figure 7 shows a gearbox, a radial magnetic coupling and generator of a transportation refrigeration system;
Figure 8 shows an enlarged view of the radial magnetic coupling of Figure 7;
Figure 9 shows a modified version of the gearbox, radial magnetic coupling and generator of Figure 7;
Figure 10 is a graphical representation of the torque performance of a synchronous magnetic coupling; and
Figure 11 is a graphical representation of the torque performance of an asynchronous magnetic coupling.

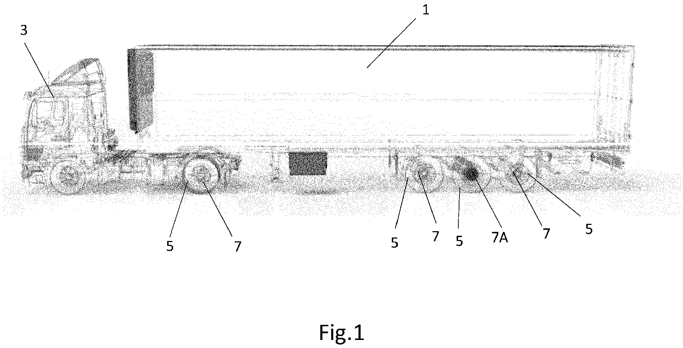

Figure 1 shows a transportation refrigeration system 1 in the form of a refrigerated trailer 1. The refrigerated trailer 1 is attached to a tractor unit 3 and together they form a heavy goods vehicle (HGV). The trailer 1 comprises a transportation refrigeration unit (not shown) in operative association with a cargo space defined within the trailer 1 and for maintaining a controlled temperature environment within the cargo space of the trailer 1.

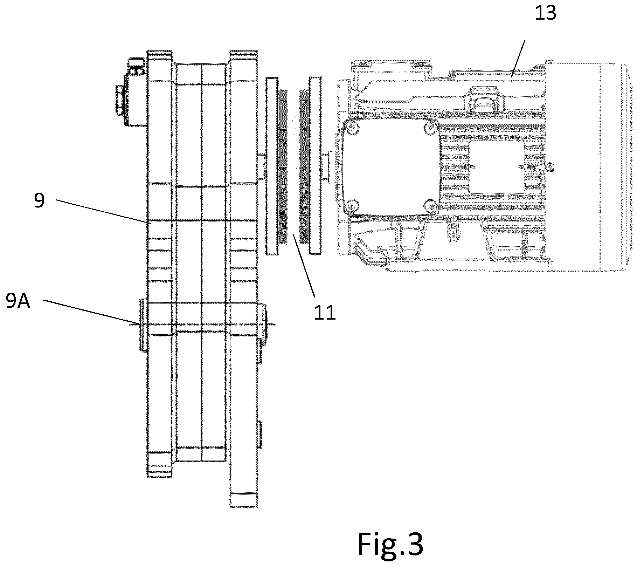

The trailer 1 comprises a plurality of wheels 5, each connected to a respective wheel axle 7, 7A. As described in more detail below with reference to Figures 3 to 9, a generator via a gearbox is coupled to the wheel axle 7A of the trailer 1. The generator is magnetically coupled to the wheel axle 7A and generates electricity in response to the rotation of the wheel axle 7A. This electricity is then supplied to the transportation refrigeration unit of the trailer 1 to power its components.

Figure 3 shows a gearbox 9 rotationally coupled to the wheel axle 7A. In Figure 3, the wheel axle 7A has been omitted for reasons of clarity; however connection 9A can be seen, which is where the wheel axle 7A rotationally couples to the gearbox 9.

On an opposed side, the gearbox 9 is also rotationally coupled to a generator 13. As such, the rotational output of the gearbox 9, which is created as a result of rotation of the wheel axle 7A which in turn is created by rotation of as the wheels 5 of the transport refrigeration unit, drives the generator 13 into rotation to thereby generate electricity. This electricity is then suppled to the transportation refrigeration unit of the trailer 1 to provide power thereto.

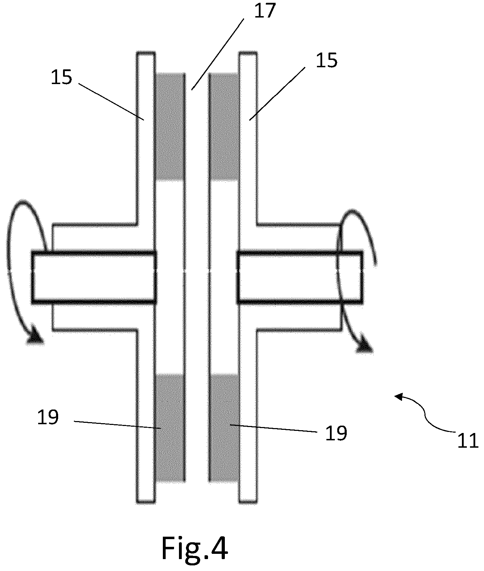

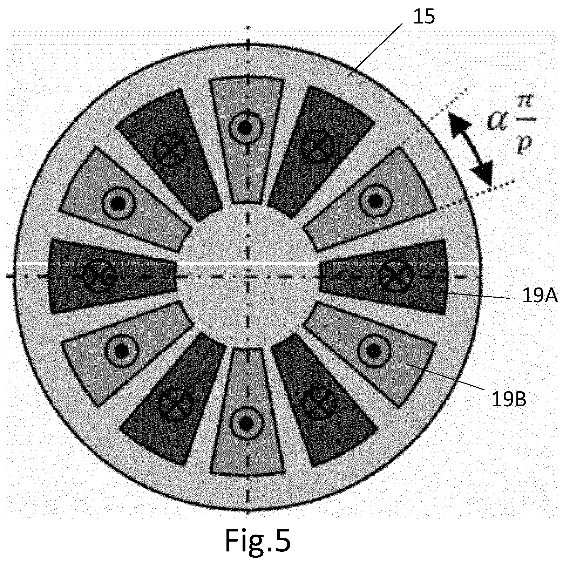

The gearbox 9 is coupled to the generator 13 via a magnetic coupling 11. More detailed views of the magnetic coupling 11 can be seen Figures 4 and 5.

As shown in Figures 3 and 4, the magnetic coupling 11 is an axial magnetic coupling 11 comprising two parallel and opposed rotor plates 15 separated by an air gap 17. The rotor plates 15 are formed from iron and each rotor plate 15 has, attached thereto so as to face the opposed rotor plate 15, a plurality of axially magnetised permanent magnets 19 glued thereto.

The arrangement of the permanent magnets 19 on the face of each of the rotor plates 15 can be seen in more detail in Figure 5. As shown, the axially magnetised permanent magnets 19 on each plate 15 are arranged on each order to form a north-south alternating polarity on the face of the rotor plate 15. This is achieved by alternating with north polarity permanent magnets 19A and south polarity permanent magnets 19B about the face of the rotor plate.

The permanent magnets 19 on each of the plates 15 are arranged identically such that each north polarity magnet 19A on one of the rotor plates 15 aligns with a corresponding north polarity magnet 19A on the other of the rotor plates 15. Similarly, each south polarity magnet 19B aligns with a corresponding south polarity magnet 19B on the other of the rotor plates 15. In this way, the magnetic coupling 11 is made synchronous.

With such a coupling 11, as the rotational output of the wheel axle 7A and thereby the gearbox 9 drives the rotor plate 15 to which the gearbox 9 is attached into rotation, the other of the rotor plates 15 is itself driven into rotation, which in turn drives the generator 13 into rotation to thereby create electricity. This electricity is then supplied to the transport refrigeration unity of the trailer 1 to provide power thereto.

The rotation in the rotor plate 15 attached to the generator 13 occurs due to a torque created by the misalignment in magnetic fields of each the plurality of magnets 19 on each rotor 15 as the rotor plate 15 attached to the gearbox 15 is rotated.

Since the coupling 11 is synchronous, the side of the coupling 11 (i.e. rotor plate 15) attached to the generator 13 is driven to rotate at the same speed as the side of the coupling 11 (i.e. the rotor plate 15) attached to the gearbox 9.

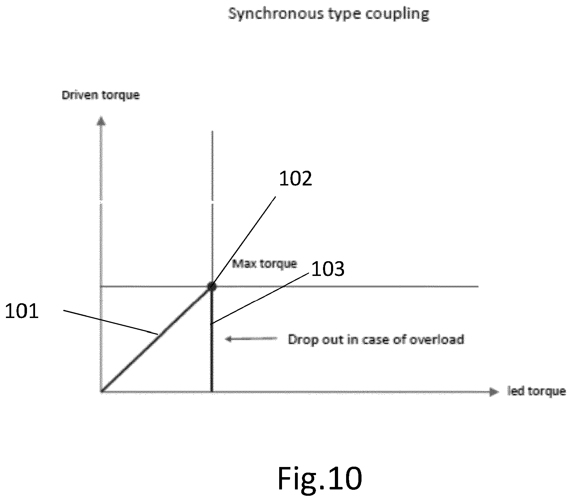

The synchronous coupling 11 only permits the transmission of a maximum rotational speed and torque between each of the plates 15 before the coupling becomes decoupled. This is represented in Figure 10.

Figure 10 is a graphical representation of the torque performance of the synchronous magnetic coupling 11, whereby the y-axis represents the torque of the rotor plate 15 attached to the generator 13 and the x-axis represents the torque of the rotor plate 15 attached to the gearbox 9.

As shown in the portion 101 of the plot, initially as the speed and thereby the torque of the rotor plate 15 attached to the gearbox 9 increases the speed/torque of the rotor plate 15 attached to the generator 13 correspondingly increases. This trend follows, until a maximum torque 102. At this point, the misalignment (i.e. the angle between the magnetic fields) between the pluralities of magnets 19 becomes too large such that the two sides (i.e. the two rotor plates 15) of the coupling 11 decouple and the rotor plate 15 attached to the gearbox 9 no longer drives rotation of the rotor plate attached to the generator. The torque of the rotor plate 15 attached to the generator 13 thus drops to zero as shown in portion 103 despite the rotor plate 15 attached to the gearbox 9 still outputting a torque.

To recouple the coupling 11 after such a decoupling, re-synchronization has to be carried out when both plates 15 have stopped rotating because the system requires a gradual start.

The concept of a decoupling at a maximum torque provided by the synchronous coupling 11 is advantageous since it allows the coupling 11 to avoid risk of overload to either side of the system. The coupling 11 will drop out before an overload (i.e. an excess of torque) can be applied to either side of the system, thereby avoiding damage to the system, improving safety and the like.

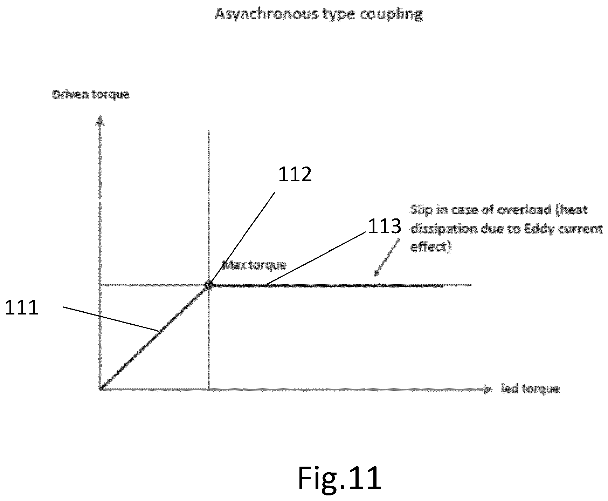

Figure 11 is a graphical representation of the torque performance of an asynchronous magnetic coupling. In such a coupling, the side of the coupling being driven into rotation does not necessarily rotate at the same speed as the side of the coupling driving rotation. In Figure 11, again the y-axis represents the torque of the side of a coupling being driven into rotation and the x-axis represents the torque of the side of the coupling driving rotation.

Similar to the synchronous coupling as discussed above, and in portion 111, initially as the speed and thereby the torque of the driving part of the coupling increases the speed/torque of the driven part of the coupling correspondingly increases. This trend follows, until a maximum torque 112 is reached. Beyond this point, the coupling does not decouple as is the case for the synchronous coupling 11 discussed above. Instead the driven part of the coupling begins to slip relative to the driving part of the coupling. This is shown in portion 113, where it is demonstrated that irrespective of the increase in torque of the driving part of the system the driven part of the system remains at the same torque and speed. The slip that occurs cause the creation of heat due to the Eddy current effect.

Whilst, as is the case for the synchronous coupling 11, the asynchronous coupling does not decouple as a maximum torque is reached, a maximum torque is still set by the asynchronous coupling. As such, overload protection is still provided for by the asynchronous coupling, which in turn provides improved safety and reduced likelihood of damage.

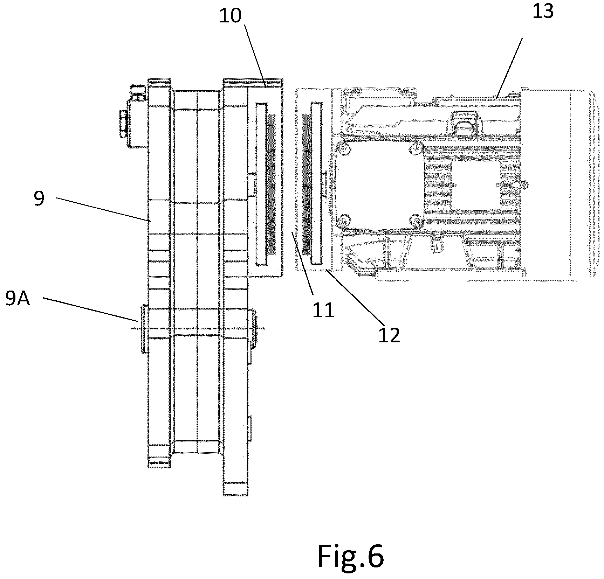

Figure 6 shows a modified version of the arrangement shown in Figure 3. The arrangement of Figure 6 is almost entirely identical to that of Figure 3, except that housings 10 and 12 are provided on the gearbox 9 and the generator 13 respectively to house respective sides of the magnetic coupling 11 therein.

The housings 10, 12 prevent the magnets 19 and rotor plates 15 from coming into contact with one another whilst still permitting the magnetic coupling therebetween.

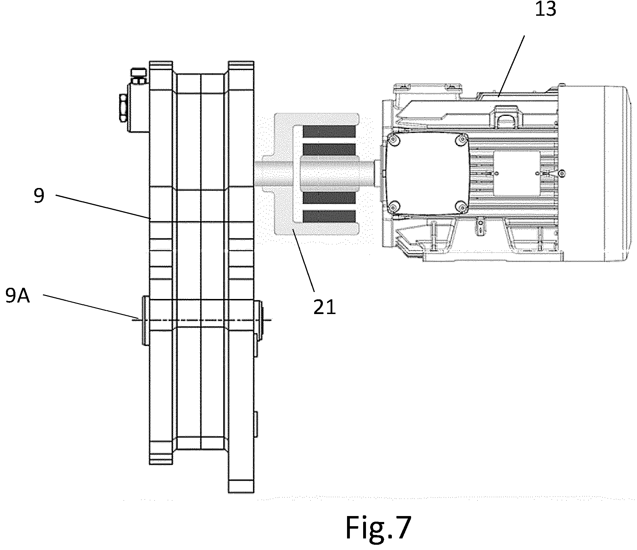

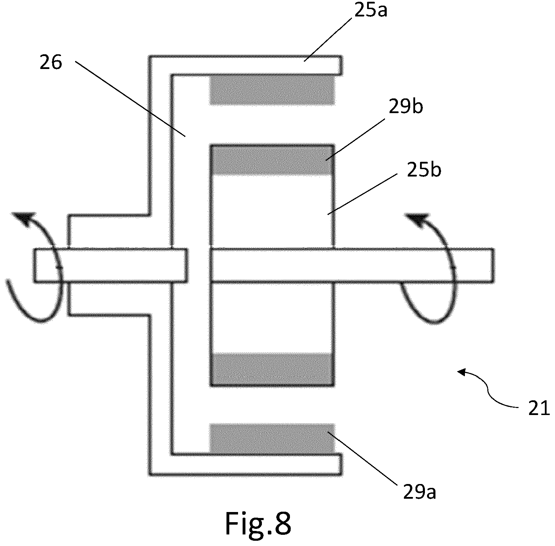

Figure 7 shows an arrangement similar to that shown in Figure 3; however in this arrangement the axial magnetic coupling 11 between the gearbox 9 and the generator 13 has been replaced by a radial magnetic coupling 21. A more detailed view of the radial magnetic coupling of Figure 7 can be seen in Figure 8.

The radial coupling 21 comprises a first rotor 25a attached to the gearbox 9 and defining a cavity 26 therein. On the surface of the first rotor 25a defining the cavity 26 are situated a plurality of magnets 29a.

The radial coupling 21 additionally comprises a second rotor 25b attached to the generator 13. The second rotor 25b is positioned within the cavity 26 of the first rotor 25a. A plurality of magnets 29b are situated on the outer surface of the second rotor 25b, facing the plurality of magnets 29a situated on the interior of the cavity 26 of the first rotor 25a but spaced therefrom.

As the gearbox 9 is driven into rotation by the wheel axle 7A, the gearbox 9 drives the first rotor 25a and the plurality of magnets 29a situated thereon into rotation. The rotation of the magnets 29a induces a torque on the magnets 29b of the second rotor 25b which thereby drives the second rotor 25b. In turn, the generator 13 is driven into rotation to generate electricity for supply to the transportation refrigeration unit of the trailer 1.

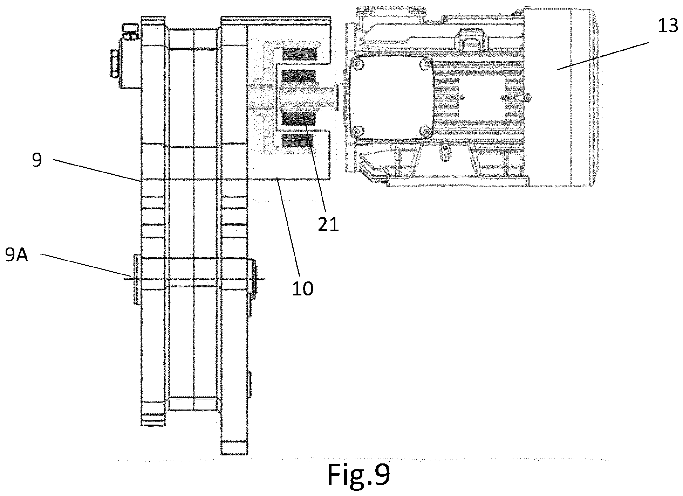

Figure 9 shows a modified version of the arrangement shown in Figure 7. The arrangement of Figure 9 is almost entirely identical to that of Figure 7, except that a housing 10 is provided on the gearbox 9 to house the first rotor 25a therein.

The housing 10 prevents the magnets 29a and 29b and rotors 25a and 25b from coming into contact with one another whilst still permitting a magnetic coupling therebetween.

## Claims

1. A transport refrigeration system (1) comprising:
a transportation refrigeration unit; and
a generator (13) coupled to a wheel axle (7A) of the transport refrigeration system via a coupling (11, 21), wherein the generator is configured to be driven to generate electricity by rotation of the wheel axle and to supply that electricity to the transportation refrigeration unit;
wherein the coupling is a magnetic coupling;
**characterized in that** the generator (13) is a rotational generator and the rotational axis of the generator is aligned with the wheel axle (7A).

2. A transportation refrigeration system according to claim 1, comprising an electrical energy storage device connected to the generator and to the transportation refrigeration unit, the electrical energy storage device being configured to receive and store electrical energy from the generator and to provide electrical power to the transportation refrigeration unit.

3. A transportation refrigeration system according to claim 1 or 2, comprising a gearbox (9) coupled between the wheel axle and the generator.

4. A transportation refrigeration system according to claim 3, wherein the gearbox is provided on the generator side of the magnetic coupling.

5. A transportation refrigeration system according to any preceding claim, wherein the magnetic coupling is an axial magnetic coupling (11).

6. A transportation refrigeration system according to any of claims 1 to 4, wherein the magnetic coupling is a radial magnetic coupling (21).

7. A transportation refrigeration system according to any of claims 1 to 6, wherein the magnetic coupling is a synchronous magnetic coupling (11).

8. A transportation refrigeration system according to any of claims 1 to 6, wherein the magnetic coupling is an asynchronous magnetic coupling.

9. A transportation refrigeration system according to any of the preceding claim, wherein the generator side of the magnetic coupling is situated in a housing (12) and/or the wheel axle side of the magnetic coupling is situated in a housing (10).

10. A transportation refrigeration system according to any of the preceding claims, wherein the gap between the two sides of the magnetic coupling is adjustable.

11. A transport refrigeration system according to any of the preceding claims, comprising a barrier (10, 11) situated in the gap between the two sides of the magnetic coupling.

12. A transportation refrigeration system according to any of the preceding claims, wherein the magnetic coupling is configured to transmit a torque in the range of 35 Nm - 400 Nm.

13. A cold chain distribution system comprising at least one transport refrigeration system (1) in accordance with any of the preceding claims.

14. A method of assembling a transportation refrigeration system (1), the method comprising:
providing a transportation refrigeration unit;
coupling, via a coupling (11), a generator (13) to a wheel axle (7A) of the transport refrigeration system such that the generator is configured to be driven to generate electricity by rotation of the wheel axle; and
connecting the generator to the transportation refrigeration unit such that the generator is configured to supply electricity to the transportation refrigeration unit;
wherein the coupling is a magnetic coupling;
**characterized in that** the generator (13) is a rotational generator and the rotational axis of the generator is aligned with the wheel axle (7A).

15. A method as claimed in claim 14, wherein the resultant transportation refrigeration system is the transportation refrigeration system of any of claims 1 to 12.

## Patentansprüche

1. Transportkühlsystem (1), umfassend:
eine Transportkühleinheit; und
einen Generator (13), der über eine Kupplung (11, 21) an eine Radachse (7A) des Transportkühlsystems gekoppelt ist, wobei der Generator dazu konfiguriert ist, angetrieben zu werden, um durch Drehung der Radachse Strom zu erzeugen und diesen Strom der Transportkühleinheit zuzuführen;
wobei es sich bei der Kupplung um eine Magnetkupplung handelt; **dadurch gekennzeichnet, dass** der Generator (13) ein Drehgenerator ist und die Drehachse des Generators mit der Radachse (7A) ausgerichtet ist.

2. Transportkühlsystem nach Anspruch 1, umfassend eine Speichervorrichtung für elektrische Energie, die mit dem Generator und der Transportkühleinheit verbunden ist, wobei die Speichervorrichtung für elektrische Energie dazu konfiguriert ist, elektrische Energie von dem Generator zu empfangen und zu speichern und der Transportkühleinheit elektrische Leistung bereitzustellen.

3. Transportkühlsystem nach Anspruch 1 oder 2, umfassend ein zwischen der Radachse und dem Generator gekoppeltes Getriebe (9) .

4. Transportkühlsystem nach Anspruch 3, wobei das Getriebe auf der Generatorseite der Magnetkupplung bereitgestellt ist.

5. Transportkühlsystem nach einem der vorhergehenden Ansprüche, wobei es sich bei der Magnetkupplung um eine axiale Magnetkupplung (11) handelt.

6. Transportkühlsystem nach einem der Ansprüche 1 bis 4, wobei es sich bei der Magnetkupplung um eine radiale Magnetkupplung (21) handelt.

7. Transportkühlsystem nach einem der Ansprüche 1 bis 6, wobei es sich bei der Magnetkupplung um eine Synchronmagnetkupplung (11) handelt.

8. Transportkühlsystem nach einem der Ansprüche 1 bis 6, wobei es sich bei der Magnetkupplung um eine Asynchronmagnetkupplung handelt.

9. Transportkühlsystem nach einem der vorhergehenden Ansprüche, wobei sich die Generatorseite der Magnetkupplung in einem Gehäuse (12) befindet und/oder sich die Radachsenseite der Magnetkupplung in einem Gehäuse (10) befindet.

10. Transportkühlsystem nach einem der vorhergehenden Ansprüche, wobei der Spalt zwischen den zwei Seiten der Magnetkupplung einstellbar ist.

11. Transportkühlsystem nach einem der vorhergehenden Ansprüche, umfassend eine Barriere (10, 11), die sich in dem Spalt zwischen den zwei Seiten der Magnetkupplung befindet.

12. Transportkühlsystem nach einem der vorhergehenden Ansprüche, wobei die Magnetkupplung dazu konfiguriert ist, ein Drehmoment im Bereich von 35 Nm-400 Nm zu übertragen.

13. Kühlkettenverteilungssystem, umfassend mindestens ein Transportkühlsystem (1) nach einem der vorhergehenden Ansprüche.

14. Verfahren zum Zusammenbauen eines Transportkühlsystems (1), wobei das Verfahren Folgendes umfasst:
Bereitstellen einer Transportkühleinheit;
Koppeln eines Generators (13) über eine Kupplung (11) an eine Radachse (7A) des Transportkühlsystems derart, dass der Generator dazu konfiguriert ist, angetrieben zu werden, um durch Drehung der Radachse Strom zu erzeugen; und
Verbinden des Generators mit der Transportkühleinheit derart, dass der Generator dazu konfiguriert ist, der Transportkühleinheit Strom zuzuführen;
wobei es sich bei der Kupplung um eine Magnetkupplung handelt;
**dadurch gekennzeichnet, dass** der Generator (13) ein Drehgenerator ist und die Drehachse des Generators mit der Radachse (7A) ausgerichtet ist.

15. Verfahren nach Anspruch 14, wobei das resultierende Transportkühlsystem das Transportkühlsystem nach einem der Ansprüche 1 bis 12 ist.

## Revendications

1. Système de réfrigération de transport (1) comprenant :
une unité de réfrigération de transport ; et
un générateur (13) couplé à un essieu de roue (7A) du système de réfrigération de transport par l'intermédiaire d'un couplage (11, 21), dans lequel le générateur est configuré pour être entraîné à générer de l'électricité par rotation de l'essieu de roue et à alimenter cette électricité à l'unité de réfrigération de transport ;
dans lequel le couplage est un couplage magnétique ;
**caractérisé en ce que** le générateur (13) est un générateur rotatif et que l'axe de rotation du générateur est aligné avec l'essieu de roue (7A).

2. Système de réfrigération de transport selon la revendication 1, comprenant un dispositif de stockage d'énergie électrique connecté au générateur et à l'unité de réfrigération de transport, le dispositif de stockage d'énergie électrique étant configuré pour recevoir et stocker l'énergie électrique du générateur et pour fournir de la puissance électrique à l'unité de réfrigération de transport.

3. Système de réfrigération de transport selon la revendication 1 ou 2, comprenant une boîte de vitesses (9) couplée entre l'essieu de roue et le générateur.

4. Système de réfrigération de transport selon la revendication 3, dans lequel la boîte de vitesses est prévue du côté générateur du couplage magnétique.

5. Système de réfrigération de transport selon une quelconque revendication précédente, dans lequel le couplage magnétique est un couplage magnétique axial (11).

6. Système de réfrigération de transport selon l'une quelconque des revendications 1 à 4, dans lequel le couplage magnétique est un couplage magnétique radial (21).

7. Système de réfrigération de transport selon l'une quelconque des revendications 1 à 6, dans lequel le couplage magnétique est un couplage magnétique synchrone (11).

8. Système de réfrigération de transport selon l'une quelconque des revendications 1 à 6, dans lequel le couplage magnétique est un couplage magnétique asynchrone.

9. Système de réfrigération de transport selon l'une quelconque des revendications précédentes, dans lequel le côté générateur du couplage magnétique est situé dans un logement (12) et/ou le côté essieu de roue du couplage magnétique est situé dans un logement (10).

10. Système de réfrigération de transport selon l'une quelconque des revendications précédentes, dans lequel l'écart entre les deux côtés du couplage magnétique est réglable.

11. Système de réfrigération de transport selon l'une quelconque des revendications précédentes, comprenant une barrière (10, 11) située dans l'écart entre les deux côtés du couplage magnétique.

12. Système de réfrigération de transport selon l'une quelconque des revendications précédentes, dans lequel le couplage magnétique est configuré pour transmettre un couple dans la plage de 35 Nm à 400 Nm.

13. Système de distribution de chaîne du froid comprenant au moins un système de réfrigération de transport (1) selon l'une quelconque des revendications précédentes.

14. Procédé d'assemblage d'un système de réfrigération de transport (1), le procédé comprenant :
la fourniture d'une unité de réfrigération de transport ;
le couplage, par l'intermédiaire d'un couplage (11), d'un générateur (13) à un essieu de roue (7A) du système de réfrigération de transport de telle sorte que le générateur est configuré pour être entraîné à générer de l'électricité par rotation de l'essieu de roue ; et
la connexion du générateur à l'unité de réfrigération de transport de telle sorte que le générateur est configuré pour alimenter de l'électricité à l'unité de réfrigération de transport ;
dans lequel le couplage est un couplage magnétique ;
**caractérisé en ce que** le générateur (13) est un générateur rotatif et que l'axe de rotation du générateur est aligné avec l'essieu de roue (7A).

15. Procédé selon la revendication 14, dans lequel le système de réfrigération de transport résultant est le système de réfrigération de transport selon l'une quelconque des revendications 1 à 12.
